# EUROPEAN PATENT APPLICATION

(11) **EP 3 147 024 A1**
(43) Date of publication of application: **29.03.2017**
(21) Application number: 15186835.3
(22) Date of filing: 25.09.2015
(51) Int. Cl.: B01D 69/08, B01D 71/80

(54) **HOLLOW-FIBRE POLYMER MEMBRANE**

(71) Applicant: Helmholtz-Zentrum Geesthacht Zentrum für Material- und Küstenforschung GmbH, 21502 Geesthacht (DE)
(72) Inventor: Abetz, Volker, 21335 Lüneburg (DE); Sankhala, Kirti, 21502 Geesthacht (DE); Koll, Joachim, 21493 Schwarzenbek (DE); Handge, Ulrich A., 21335 Lüneburg (DE)
(74) Representative: Uexküll & Stolberg

(57) **Abstract**

The present invention relates to a hollow-fibre membrane having a novel structure and to a production method therefor. In particular, the hollow-fibre membrane according to the present invention is characterized in that it has an isoporous inner skin and a porous outer skin. The production method for the hollow-fibre membrane according to the present invention includes a novel dry/wet spinning method.

The method for producing a hollow-fibre polymer membrane having an isoporous inner skin, and a porous outer skin, comprises providing a polymer solution of at least one amphiphilic block copolymer in a solvent; extruding the polymer solution (dope) through a first annular die in a spinneret while simultaneously pressing a core gas stream through at least one orifice encircled by the first die and extruding a sheath liquid comprising at least one precipitant from a second annular die encircling the first die into air, and subsequently into an aqueous precipitation bath, thereby providing a gap between spinneret and precipitation solution through which the extruded polymer solution passes surrounded by the sheath liquid and surrounding the core gas stream, and finally precipitating the spinning solution in the precipitation bath to form the hollow-fibre polymer membrane.

The invention further relates to the use of the hollow-fibre polymer membrane according to the present invention for filtration, such as in particular for microfiltration, ultrafiltration, nanofiltration and/or reverse osmosis, in particular for ultrafiltration.

## Description

### TECHNICAL FIELD

The present invention relates to a hollow-fibre membrane having a novel structure and to a production method therefor. In particular, the hollow-fibre membrane according to the present invention is characterized in that it has an isoporous inner skin and a porous outer skin. The production method for the hollow-fibre membrane according to the present invention includes a novel dry/wet spinning method.

The invention further relates to the use of the hollow-fibre polymer membrane according to the present invention for filtration, such as in particular for microfiltration, ultrafiltration, nanofiltration and/or reverse osmosis, in particular for ultrafiltration.

### BACKGROUND OF INVENTION

Membrane separation technology using a separation membrane having a hollow-fibre structure has been applied to water purification and sewage and wastewater processes. In accordance with the material used for its production, membranes useful in particular for water treatment can be classified into the following categories: polymer membranes, ceramic membranes, and metal membranes. Such membranes are used for microfiltration (MF), ultrafiltration (UF), nanofiltration (NF), and reverse osmosis (RO). Ultra-filtration membranes allow the ion material to be permeated, but remove low-molecular polymer particles or bacteria and viruses, and may vary according to the requirements of use. They usually have a pore size in a range of from 0.01 to 0.1 µm. Ultra-filtration membranes having such characteristics have a wide application range, but are particularly interesting for pretreatment of process water or ultrapure water, reuse, sewage and wastewater treatment and water purification.

Polymeric porous sheet membranes are generally prepared by phase separation of polymer solutions. Phase separation can be induced by cooling or by the presence of precipitant. Precipitant induced phase separation (NIPS) is taught for example in U.S. Patents 3,615,024; 5,066,401; and 6,024,872. Thermally induced phase separation (TIPS) is taught for example in U.S. Patents 4,702,836 and 7,247,238.

A large number of microporous membranes with a variety of morphologies have been prepared from various polymers, including poly(vinylidene fluoride) (PVDF), polyethylene, polypropylene, poly(methyl methacrylate), polystyrene and poly(ethylene-co-vinyl alcohol), by TIPS. In particular, PVDF, which is a semi-crystalline polymer, has wide applications in manufacture of microfiltration (MF) and ultrafiltration (UF) membranes because of its excellent properties such as good mechanical strength, stability against aggressive chemicals and good thermal stability. PVDF microfiltration membranes prepared by the TIPS method have been commercially applied in drinking-water production and wastewater treatment.

Published U.S. Patent Application 2009 173 694 A1 discloses a method for producing polymeric membranes having an isoporous separation-active structure by the NIPS method. The method includes dissolving one or more polymers, at least one of which is a block copolymer, in a liquid which includes a solvent, to produce a casting solution. The casting solution is formed into film, and the film is immersed into a precipitation bath which contains at least one precipitant for the block copolymer so that the film forms a membrane. The membrane is used for filtering a fluid that contains colloidal particles or proteins, and/or for ultrafiltration or nanofiltration, by flowing the fluid through the membrane.

Polymeric hollow-fibre membranes are desirable over sheet membranes because they have comparatively higher surface area per volume of the module and higher packaging densities. Polymeric hollow-fibre membranes are commonly produced by "*melt spinning",* where a thermoplastic polymer is molten and extruded through a spinneret into air and subsequently cooled, by "*dry spinning",* where a polymer is dissolved in an appropriate solvent and extruded through a spinneret into air and subsequently cooled, by *"dry*/*wet spinning",* where a polymer is dissolved in an appropriate solvent and extruded into air and a subsequent precipitant, usually water, and *"wet spinning",* where a polymer is dissolved and extruded directly into a precipitant. Common to each of these methods is the use of a spinneret, which comprises an annular die through which a polymer solution is extruded. Spinnerets are e.g. described in published European Patent Application 0 277 619 A2 or in U.S. Patent 4,385,017, which are both incorporated herein by reference.

As the polymer exits the spinneret, it solidifies into a membrane through a process known as *"phase inversion".* Phase inversion can be induced by reducing the temperature of the solution, immersing the polymer solution into a non-solvent, exposing the polymer to a vapor of non-solvent or evaporating the solvent in atmospheric air or at high temperature. The properties of the membrane - such as average pore diameter and membrane thickness - can be finely tuned by changing the dimensions of the spinneret, temperature and composition of *"dope"* (polymer) and *"bore"* (solvent) solutions, length of air gap (for dry/wet spinning), temperature and composition of the precipitant, as well as the speed at which produced fibre is collected by a motorized spool. Extrusion of the polymer and solvent through the spinneret can be accomplished either through the use of gas-extrusion or a metered pump. Some of the polymers most commonly used for fabricating hollow-fibre membranes include cellulose acetate, polysulfone, polyethersulfone, and polyvinylidene flouride.

Polymeric hollow-fibre membranes have a more or less large statistical variance of the distribution of the pore size. In addition to a low selectivity, hollow-fibre membranes having too large pore sizes tend to fouling, whereby the large pores are blocked. In order to reduce the tendency of fouling, isoporous membranes have been developed.

Published Canadian Patent Application 2,886,437 A1, which is incorporated herein by reference, discloses a method for producing a hollow-fibre polymer membrane having an isoporous outer skin, a porous inner skin and a sponge-like inner structure. The method described in CA 2,886,437 A1 comprises providing a polymer solution of at least one amphiphilic block copolymer in an appropriate solvent, extruding the polymer solution through an annular die in a spinneret while simultaneously extruding an aqueous core liquid from an orifice encircled by the annular die into air and subsequently into a precipitation bath to precipitate the spinning solution to form the hollow fibre. The method described in CA 2,886,437 A1 produces excellent hollow-fibre polymer membrane having an isoporous outer skin.

However, in many cases an opposite filtration direction is desirable. This is because of ease during filtration, handling and maintenance. For example, cleaning of membranes with isoporous inner skin by backwashing or forward aeration will be easier, and the overall fouling and clogging by bacteria may thereby be reduced in comparison to hollow-fibre polymer membranes having an isoporous outer skin. However, production of hollow-fibre polymer membranes having an isoporous inner skin and a porous outer skin remains a challenge.

### SUMMARY OF INVENTION

It is therefore an object of the present invention to provide such hollow-fibre polymer membranes having an isoporous inner skin, as well as a method for the production thereof.

The above objects are solved by a method for producing a hollow-fibre polymer membrane having an isoporous inner skin, and a porous outer skin, comprising providing a polymer solution of at least one amphiphilic block copolymer in a suitable solvent; extruding the polymer solution (dope) through a first annular die in a spinneret while simultaneously pressing a core gas stream, preferably with constant pressure, through at least one orifice encircled by the first die and extruding a sheath liquid comprising at least one precipitant from a second annular die encircling the first die into air, and subsequently into an aqueous precipitation bath, thereby providing a gap between spinneret and precipitation solution through which the extruded polymer solution passes surrounded by the sheath liquid and surrounding the core gas stream, and finally precipitating the spinning solution in the precipitation bath to form the hollow-fibre polymer membrane.

Preferably the first and second dies have an annular die exit. However, alternative geometries such as elliptical die exits or a profiled die exits are also conceivable.

According to one embodiment, the method according to the present invention comprises in particular pressing a core gas stream though one orifice encircled by the first and second annular dies to form a single-bore hollow-fibre polymer membrane. According to another embodiment the method according to the present invention comprises pressing a core gas stream through at least two, preferably three to ten, more preferably five to seven orifices encircled by the first and second annular dies to form a multi-bore hollow-fibre polymer membrane.

The membranes according to the present invention are self-supporting and have an isoporous inner skin, a porous outer skin, and a sponge-like inner structure. Formation of cylindrical pore structures on the inner skin is effected at the gap between spinneret and precipitation solution though which the extruded polymer solution passes surrounded by the sheath liquid and surrounding the core gas stream before entering the precipitation solution in that volatile solvents evaporate from the polymer solution into the core gas stream at the inner skin of the forming membrane.

### DETAILED DESCRIPTION OF PREFERRED EMBODIMENTS

The at least one amphiphilic block copolymer used in the polymer solution for producing the hollow-fibre membranes according to the present invention preferably comprises two or more different polymer blocks such as blocks A, B; or A, B, C; or A, B, C, D forming block copolymers of the configuration A-B, A-B-A, A-B-C, A-B-C-B-A, A-B-C-D, A-B-C-D-C-B-A or multiblock copolymers based on the aforementioned configurations. Multiblock copolymers comprise structures of the base configurations that repeat multiple times. The polymer blocks are preferably selected from the group consisting of polystyrene, poly(α-methylstyrene), poly(para-methylstyrene), poly(t-butyl styrene), poly(trimethylsilylstyrene), poly-4-vinylpyridine, poly-2-vinylpyridine, poly(vinyl cyclohexane), polybutadiene, polyisoprene, poly(ethylene-stat-butylene), poly(ethylene-alt-propylene), polysiloxane, polyalkylene oxide such as polyethylene oxide, poly-ε-caprolactone, polylactic acid, poly(alkyl methacrylate) such as poly(methyl methacrylate), polymethacrylic acid, poly(alkyl acrylate) such as poly(methyl acrylate), polyacrylic acid, poly(hydroxyethyl methacrylate), polyacrylamide, poly-N-alkylacrylamide, polysulfone, polyaniline, polypyrrole, polytriazole, polyvinylimidazole, polytetrazole, polyethylene diamine, polyvinyl alcohol, polyvinylpyrrolidone, polyoxadiazole, polyvinylsulfonic acid, polyvinyl phosphonic acid or polymers.

Preferred amphiphilic block copolymers for use in the present invention are selected from polystyrene-b-poly-4-vinylpyridine copolymers, poly(α-methylstyrene)-b-poly-4-vinylpyridine copolymers, poly(para-methylstyrene)-b-poly-4-vinylpyridine copolymers, poly(t-butylstyrene)-b-poly-4-vinylpyridine copolymers, poly(trimethylsilylstyrene)-b-poly-4-vinylpyridine copolymers, polystyrene-b-poly-2-vinylpyridine copolymers, poly(α-methylstyrene)-b-poly-2-vinylpyridine copolymers, poly(para-methylstyrene)-b-poly-2-vinylpyridine copolymers, poly(t-butylstyrene)-b-poly-2-vinylpyridine copolymers, poly(trimethylsilylstyrene)-b-poly-2-vinylpyridine copolymers, polystyrene-b-polybutadiene copolymers, poly(α-methylstyrene)-b-polybutadiene copolymers, poly(para-methylstyrene)-b-polybutadiene copolymers, poly(t-butylstyrene)-b-polybutadiene copolymers, poly(trimethylsilylstyrene)-b-polybutadiene copolymers, polystyrene-*b*-polyisoprene copolymers, poly(α-methylstyrene)-b-polyisoprene copolymers, poly(para-methylstyrene)-b-polyisoprene copolymers, poly(t-butylstyrene)-b-polyisoprene copolymers, poly(trimethylsilyl-styrene)-b-polyisoprene copolymers, polystyrene-b-poly(ethylene-stat-butylene) copolymers, poly(α-methylstyrene)-b-poly(ethylene-stat-butylene) copolymers, poly(para-methylstyrene)-*b*-poly(ethylene-stat-butylene) copolymers, poly(t-butylstyrene)-b-poly(ethylene-stat-butylene) copolymers, poly(trimethylsilylstyrene)-b-poly(ethylene-stat-butylene) copolymers, polystyrene-*b*-(ethylene-alt-propylene) copolymers, poly(α-methylstyrene)-*b*-(ethylene-alt-propylene) copolymers, poly(para-methylstyrene)-b-(ethylene-alt-propylene) copolymers, poly(t-butylstyrene)-b-(ethylene-alt-propylene) copolymers, poly(trimethylsilylstyrene)-b-(ethylene-alt-propylene) copolymers, polystyrene-b-polysiloxane copolymers, poly(α-methylstyrene)-*b*-polysiloxane copolymers, poly(para-methylstyrene)-b-polysiloxane copolymers, poly(t-butylstyrene)-b-polysiloxane copolymers, poly(trimethylsilylstyrene)-b-polysiloxane copolymers, polystyrene-b-polyalkylene oxide copolymers, poly(α-methylstyrene)-b-polyalkylene oxide copolymers, poly(paramethylstyrene)-b-polyalkylene oxide copolymers, poly(t-butylstyrene)-b-polyalkylene oxide copolymers, poly(trimethylsilylstyrene)-b-polyalkylene oxide copolymers, polystyrene-b-poly-ε-caprolactone copolymers, poly(α-methylstyrene)-b-poly-ε-caprolactone copolymers, poly(para-methylstyrene)-*b*-poly-ε-caprolactone copolymers, poly(t-butylstyrene)-*b*-poly-ε-caprolactone copolymers, poly(trimethylsilylstyrene)-*b*-poly-ε-caprolactone copolymers, polystyrene-b-poly(methyl methacrylate) copolymers, poly(α-methylstyrene)-*b*-poly(methyl methacrylate) copolymers, poly(para-methylstyrene)-b-poly(methyl methacrylate) copolymers, poly(t-butylstyrene)-*b*-poly(methyl methacrylate) copolymers, poly(trimethylsilylstyrene)-b-poly (methyl methacrylate) copolymers, polystyrene-b-poly(methyl acrylate) copolymers, poly(α-methylstyrene)-*b-*poly(methyl acrylate) copolymers, poly(para-methylstyrene)-b-poly(methyl acrylate) copolymers, poly(t-butylstyrene)-b-poly(methyl acrylate) copolymers, poly(trimethylsilylstyrene)-b-poly(methyl acrylate), polystyrene-b-poly(hydroxyethyl methacrylate) copolymers, poly(α-methylstyrene)-*b-*poly(hydroxyethyl methacrylate) copolymers, poly(paramethylstyrene)-b-poly(hydroxyethyl methacrylate) copolymers, poly(t-butylstyrene)-b-poly(hydroxyethyl methacrylate) copolymers, poly(trimethylsilylstyrene)-b-poly(hydroxyethyl methacrylate) copolymers, polystyrene-b-polyacrylamide copolymers, poly(α-methylstyrene)-*b*-polyacrylamide copolymers, poly(paramethylstyrene)-b-polyacrylamide copolymers, poly(t-butylstyrene)-b-polyacrylamide copolymers, poly(trimethylsilylstyrene)-b-polyacrylamide copolymers, polystyrene-b-polyvinyl alcohol copolymers, poly(α-methylstyrene)-*b-*polyvinyl alcohol copolymers, poly(para-methylstyrene)-b-polyvinyl alcohol copolymers, poly(t-butylstyrene)-*b*-polyvinyl alcohol copolymers, poly(trimethylsilylstyrene)-b-polyvinyl alcohol copolymers, polystyrene-b-polyvinylpyrrolidone copolymers, poly(α-methylstyrene)-*b*-polyvinylpyrrolidone copolymers, poly(para-methylstyrene)-*b*-polyvinylpyrrolidone copolymers, poly(t-butylstyrene)-*b*-polyvinylpyrrolidone copolymers, poly(trimethylsilylstyrene)-*b*-polyvinylpyrrolidone copolymers, polystyrene-*b*-poly-vinylcyclohexane copolymers, polystyrene-b-poly-vinylcyclohexane copolymers, polystyrene-b-poly-vinylcyclohexane copolymers, polystyrene-*b*-poly-vinylcyclohexane copolymers, poly(trimethylsilylstyrene)-*b*-poly-vinylcyclohexane copolymers and the like.

The block copolymers and the polymer blocks used according to the present invention preferably have a polydispersity of less than 2.5, more preferably of less than 2.2, more preferably of less than 2.0. The polymer lengths of the at least two polymer blocks of the amphiphilic block copolymers are preferably selected with respect to each other so that a self-organization in the solvent leads to the formation of a spherical, cylindrical or co-continuous, in particular gyroidal, micelle structures or microphase structures in the solvent, in particular a length ratio between approximately 2:1 and approximately 10:1, in particular between approx. 3:1 and 6:1. These length ratios of the majority components to the minority components of the block copolymers lead to the desired micelle structure, i.e. to the inclusion of individual spherical micelles of the minority components in the bulk of the majority components or to cylindrical or continuous, for example gyroidal, micelle structures, in which the minority components form the cylinders or respectively gyroidal filaments or respectively branchings in the bulk of the majority components.

The block copolymers preferably have a molecular weight between 50 kg/mol and 200 kg/mol, in particular between 75 kg/mol and 150 kg/mol. In this range, the pore size can be adjusted in a particular fine manner through selection of the molecular weight. The polymer preferably makes up a percentage by weight between 10 wt.% and 50 wt.%, more preferably between 15 wt.% and 35 wt.%, and most preferably between 25 wt.% and 30 wt.% of the polymer solution.

Several solvents are suitable for preparing the polymer solution. Preferred solvents include diethyl ether, dimethylformamide, dimethylacetamide, N-methylpyrrolidone, dimethylsulfoxide, acetonitrile, dioxane, acetone, and/or tetrahydrofurane. Preferably, a solvent mixture is applied which is preferably selected such that different polymer blocks of the amphiphilic block copolymers are soluble up to different degrees and such that solvents are volatile to different degrees. The use of a solvent mixture supports the solidification of the self-organization and microphase formation on the inner surface of the hollow fibre before immersion in the precipitation bath. A preferred solvent mixture includes dimethylformamide and tetrahydrofurane.

According to a further preferred embodiment of the present invention, the polymer solution comprises at least one metal salt. Preferably the metal is selected from an element of the second main group of the periodic system of elements, such as Mg, Ca or Sr or from non-toxic transition metals such as Fe. More preferably, the salt is an organic salt of Mg, Ca or Sr, most preferably magnesium acetate. The metals of the second main group of the periodic system are biocompatible making them preferred for hollow-fibre membranes with biological applications. The supporting effect of the salt in the phase separation can probably be explained in that the metal salt leads to the formation of partially charged polyelectrolytic micelle cores, which positively impact the precipitant-induced phase separation.

According to a still further preferred embodiment, the polymer solution comprises at least one carbohydrate, multifunctional phenol and/or multifunctional organic acid. Preferred carbohydrates include saccharose, D(+)-glucose, D(-)-fructose and/or cyclodextrin, in particular α-cyclodextrin. Carbohydrates as used in the present invention lead to a stabilization of the isoporous separation-active surface during the phase inversion. The supporting effect of the at least one carbohydrate in phase separation can probably be explained in that the carbohydrates form hydrogen bonds with the hydrophilic block of the block copolymers.

The sheath liquid extruded from the second annular die comprises at least one precipitant such as water and/or an alcohol, such as methanol or ethanol. According to the present invention, a precipitant with reduced precipitation activity is preferably used as a sheath liquid for producing the outer surface of the hollow-fibre membrane since tests have shown that a conventional precipitant such as water, a mixture of polyethylene glycol (PEG) and water, or a mixture of glycerol and water do not provide a sufficiently coarsened porous outer skin. The use of a precipitant with reduced precipitation activity causes the surface formation to progress with slower kinetics than for a conventional precipitant and, thus, causes that larger pores can form in a more regular manner. Therefore, the liquid sheath preferably consists of a mixture of at least one precipitant, most preferably water, and at least one solvent for the at least one amphiphilic block copolymer. Preferably the precipitant comprises water, methanol, ethanol or a mixture of two or more thereof. Most preferably, precipitant comprises water, methanol, ethanol or a mixture of two or more thereof in admixture with any one or more of diethyl ether, dimethylformamide, dimethylacetamide, N-methylpyrrolidone, dimethylsulfoxide, acetonitrile, acetone, and/or tetrahydrofurane. Most preferably the precipitant comprises a mixture of water and dimethylformamide. Preferably the ratio of water, methanol, ethanol or a mixture of two or more thereof on the one hand, and diethyl ether, dimethylformamide, dimethylacetamide, N-methylpyrrolidone, dimethylsulfoxide, acetonitrile, acetone, and/or tetrahydrofurane is from 75:25 to 40:60, more preferably about 50:50. Most preferably the precipitant comprises or is comprised of a mixture of water and dimethylformamide in a ratio of about 50:50.

The liquid in the precipitation bath preferably also comprises water, methanol, ethanol or a mixture of two or more thereof in admixture with any one or more of diethyl ethern more preferably in admixture with at least one pore forming material such as polyethylene glycol (PEG) or glycerol. Most preferably the precipitation bath comprises or is comprised of a mixture of water and glycerol.

The core gas may be selected from any gas which does not react with the polymer of the membrane. Preferably, the core gas is selected from air, nitrogen and/or a noble gas such as argon or helium, most preferably from air or nitrogen.

In accordance with a preferred embodiment of the method according to the present invention, the polymer solution is extruded through the first annular orifice in the spinneret with a pressure of 1 to 50 kPa gauge, in particular between 5 and 25 kPa gauge, thereby forming a regular hollow-fibre membrane. The gap between the spinneret and the precipitation bath preferably has a length of between 1 cm and 50 cm, in particular between 10 cm and 25 cm.

The object underlying the invention is also solved by a hollow-fibre polymer membrane having an isoporous inner skin and a porous outer skin. The isopores of the separation-active inner surface preferably have a ratio of the maximum pore diameter to the minimum pore diameter of less than 3.

Furthermore, the present invention provides a filtration module, in particular a microfiltration module, an ultrafiltration module, or a nanofiltration module, comprising at least one of the hollow-fibre polymer membranes according to the present invention.

Further characteristics of the invention will become apparent from the description of embodiments according to the invention together with the claims and the included drawings.

### DETAILED EXPLANATION OF PREFERRED EMBODIMENTS WITH REFERENCE TO THE FIGURES

The invention is now described below in an exemplary manner, without restricting the general intent of the invention, based on exemplary embodiments with reference to the figures appended hereto, wherein:

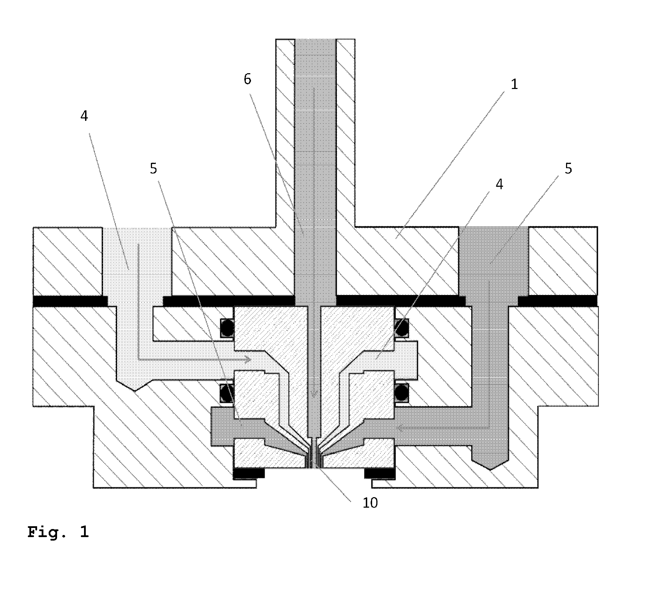

Fig. 1 is a schematic cross-sectional representation of a spinneret as used in the present invention.

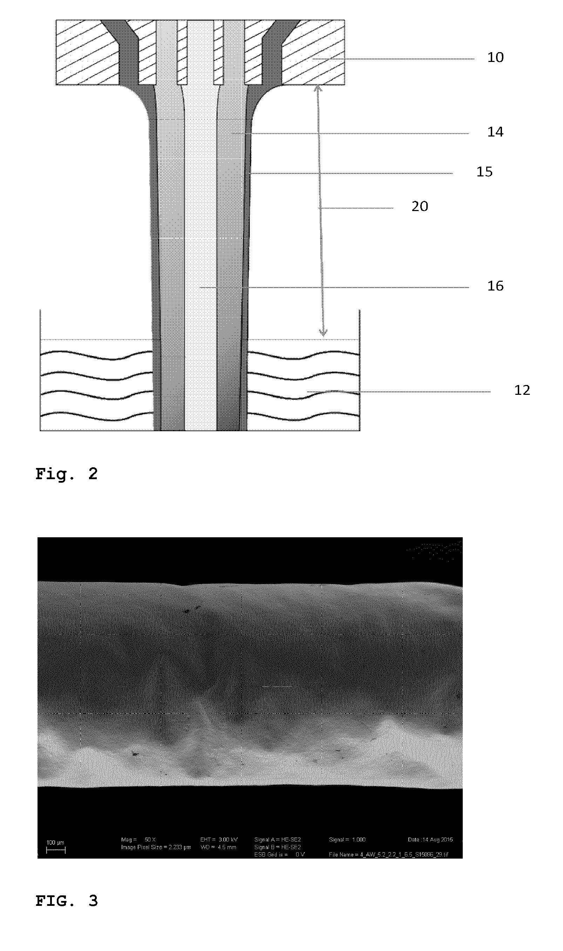

Fig. 2 is a schematic cross-sectional illustration of the method for forming a hollow-fibre polymer membrane having an isoporous inner skin and a porous outer skin according to the present invention.

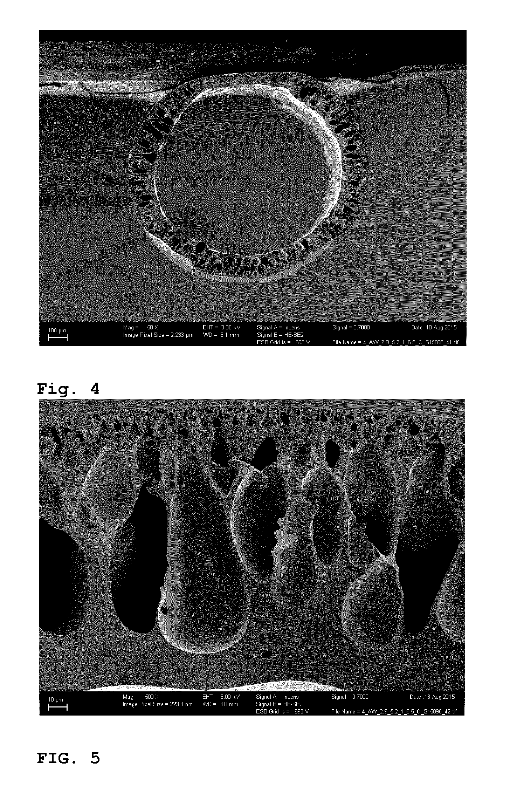

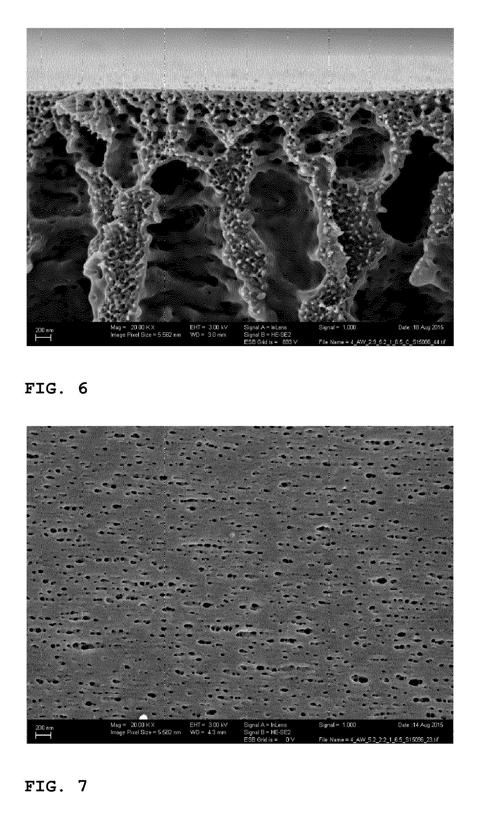

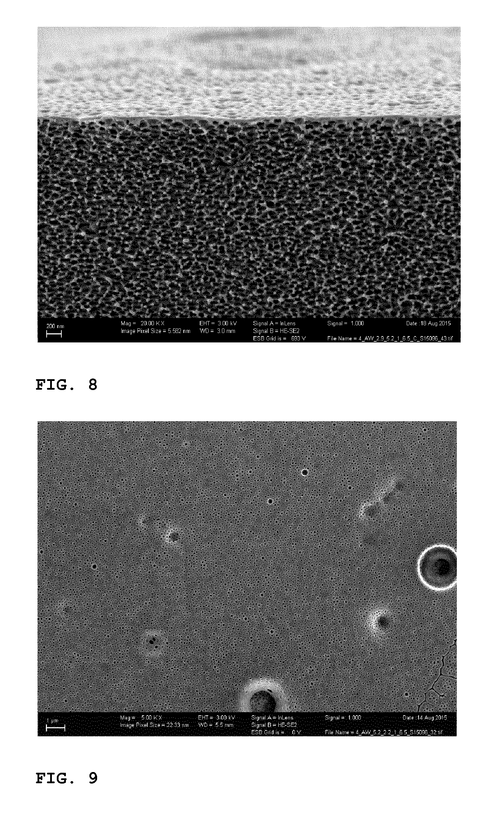

Figs. 3 to 9 are SEM images of a membrane produced according to Example 1 of the present invention (produced from a polystyrene-b-poly-4-vinylpyridine copolymer which was dissolved in a DMF/THF mixture using the following process parameters: air flow: 1.21 mL/min; dope flow rate: 2.2 mL/min; water flow rate: 1 mL/min; air gap: 6 cm). Fig. 3 is a representation of the hollow-fibre polymer membrane, and Figs. 4 and 5 are representations of a cross-sectional cut through the hollow-fibre polymer membrane in different enlargements. Fig. 6 shows the cross section of hollow-fibre polymer membrane at the outer surface, and Fig. 7 shows the outer surface of the hollow-fibre polymer membrane in planar view. Fig. 8 shows the cross section at the inner surface of the hollow-fibre polymer membrane, and Fig. 9 shows the inner surface of hollow-fibre polymer membrane in planar view.

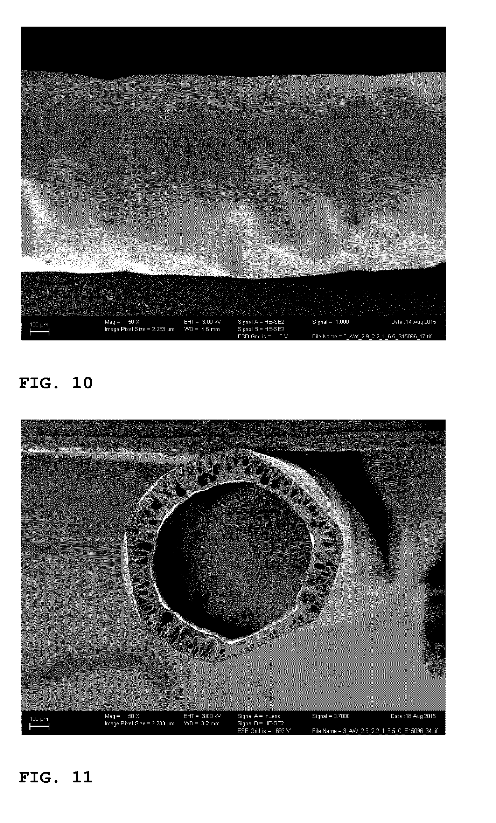

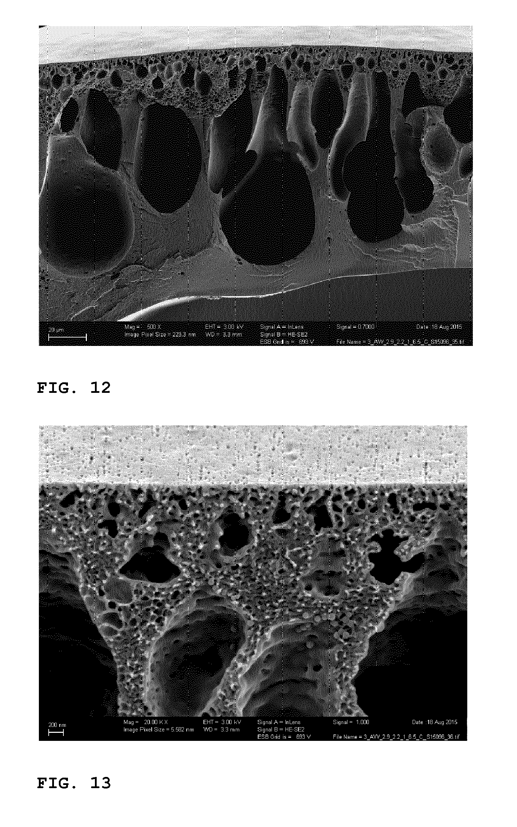

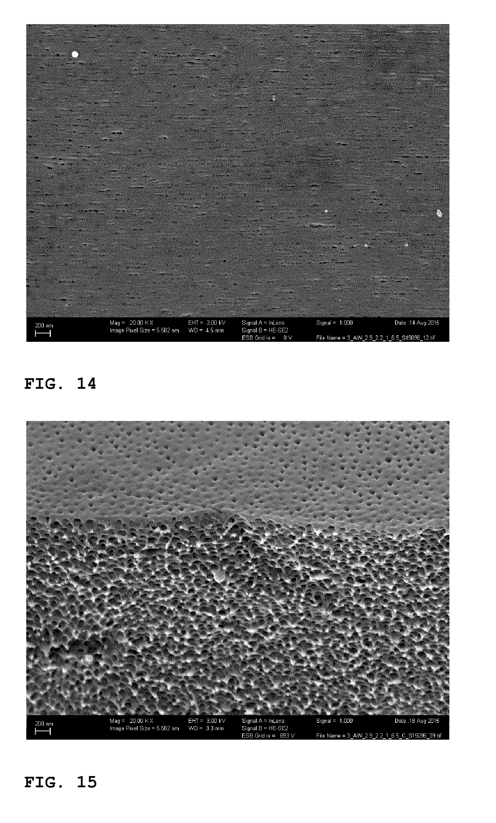

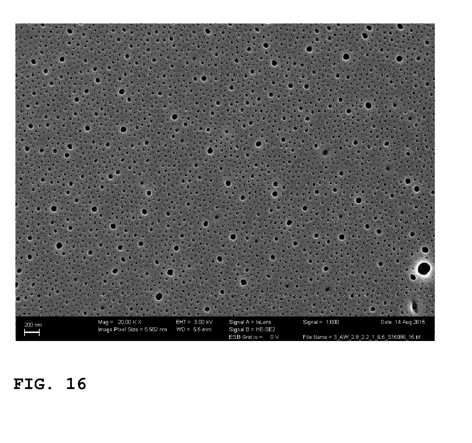

Figs. 10 to 16 are SEM images of a membrane produced according to Example 1 of the present invention (produced from a polystyrene-b-poly-4-vinylpyridine copolymer which was dissolved in a DMF/THF mixture using the following process parameters: air flow: 1.74 mL/min; dope flow rate: 2.2 mL/min; water flow rate: 1 mL/min; air gap: 6 cm). Fig. 10 is a representation of the hollow-fibre polymer membrane, and Figs. 11 and 12 are representations of a cross-sectional cut through the hollow-fibre polymer membrane in different enlargements. Fig. 13 shows the cross section of hollow-fibre polymer membrane at the outer surface, and Fig. 14 shows the outer surface of the hollow-fibre polymer membrane in planar view. Fig. 15 shows the cross section at the inner surface of the hollow-fibre polymer membrane, and Fig. 16 shows the inner surface of hollow-fibre polymer membrane in planar view.

With reference to Fig. 1, there is shown a schematic cross-sectional representation of a spinneret **1** as used in the present invention, which comprises a first pathway **4** through which a polymer solution of a at least one amphiphilic block copolymer in a solvent is provided, a second pathway **5** through which a sheath liquid comprising at least one precipitant pathway is provided, and a third pathway **6** through which a core gas stream is provided. The polymer solution is extruded through an annular die **10** via pathway **4** in direction of the arrow. Simultaneously, a precipitant liquid is extruded through said annular die **10** via pathway **5** in direction of the arrow, and a gas stream is fed to an orifice within said die **10** via pathway **6** in direction of the arrow. The annular die **10** is designed such that the core gas stream **6** exits the die though at least one orifice encircled by a first annular die through which the polymer solution is fed to the annular die via pathway **4.** The liquid sheath comprising at least one precipitant exits the spinneret through a second, outermost annular die which encircles the first annular die, and is fed to said second annular die via pathway **5.**

More details of the construction of the dies will become apparent from Fig. 2.

With reference to Fig. 2 there is shown a schematic cross-sectional representation of an annular die **10** and method according to the invention. The annular die **10** comprises a central orifice through which the gas stream **16** exits the spinneret, a first annular die encircling the central orifice through which the polymer solution **14** exits the spinneret, and a second, outermost annular die encircling the first annular portion through which the liquid sheath **15** exits the spinneret. The polymer solution **14** is extruded through said first annular die in spinneret **10** while simultaneously pressing a core gas stream **16** though a central orifice encircled by the first annular die and extruding a sheath liquid **15** comprising at least one precipitant from a second annular die encircling the first annular die into air, and subsequently into an aqueous precipitation bath **12.** The gap **20** between spinneret and precipitation solution through which the extruded polymer solution passes surrounded by the sheath liquid and surrounding the core gas stream can be adjusted according to the requirements of the membrane. The spinning solution is finally precipitated in the precipitation bath **12** to form the hollow-fibre polymer membrane.

According to the embodiments of Figs. 1 and 2, the method according to the present invention comprises in particular pressing a core gas stream though one central orifice encircled by the first and second annular dies to form a single-bore hollow-fibre polymer membrane. Alternatively the embodiments of Figs. 1 and 2 may be modified in that the core gas stream is pressed through at least two, preferably three to ten, more preferably five to seven orifices encircled by the first and second annular dies to form a multi-bore hollow-fibre polymer membrane.

The parameters of the process such as temperature and flow rate of the polymer solution, temperature and flow rate of the liquid sheath, air flow and gap are selected such that a mechanically stable hollow fibre **14** is created as soon as it leaves the spinneret **10** in the direction of the precipitation bath **12** and a formation of a impermeable skin on the outside of the hollow fibre **14** is avoided.

Figs. 3 to 9 are SEM images of a membrane produced according to Example 1 of the present invention (produced from a polystyrene-b-poly-4-vinylpyridine copolymer which was dissolved in a DMF/THF mixture using the following process parameters: air flow: 1.21 mL/min; dope flow rate: 2.2 mL/min; water flow rate: 1 mL/min; air gap: 6 cm). Fig. 3 is a representation of the hollow-fibre polymer membrane, and Figs. 4 and 5 are representations of a cross-sectional cut through the hollow-fibre polymer membrane in different enlargements. Fig. 6 shows the cross section of hollow-fibre polymer membrane at the outer surface, and Fig. 7 shows the outer surface of the hollow-fibre polymer membrane in planar view. Fig. 8 shows the cross section at the inner surface of the hollow-fibre polymer membrane, and Fig. 9 shows the inner surface of hollow-fibre polymer membrane in planar view.

The scanning electron microscope (SEM) images in Figures 3 to 16 show a relatively narrow pore size distribution on the inner skin, which is caused by the microphase separation and the solvent-precipitant exchange. In contrast, the outer skin shows elliptical pore structures, which were created due to the slowed phase inversion on the inside of the hollow fibre **14** and aligned parallel to the spinning direction due to the shearing in the gap. In certain cases, considerable hollow spaces occur here, which create a porosity, which is needed for the filtration.

### EXAMPLES

### Polymer solution preparation:

Polystyrene-*block*-poly(4-vinylpyridine) (PS-b-P4VP) block copolymer was dissolved in the mixtures of *N,N*-dimethyl formamide (DMF) and tetrahydrofuran (THF) at room temperature for about 24 hours under continuous mixing with a magnetic stirrer until the dope solution became homogeneous. Before spinning, the prepared polymer solutions remained at room temperature without stirring for 12 hours to remove the shear effect of stirring and fine air bubbles entrapped in the solutions.

### Spinning of integral asymmetric hollow fiber membrane with wet-dry jet technique:

PS-b-P4VP hollow fiber membranes were spun at different air gap distances, which were varied as follows: 6, 10, 15, and 20 cm. The spinneret comprised a combination of three concentric cylinders. The innermost cylinder had a diameter of 0.32 mm for bore fluid which was connected to air. The syringe of the dope solution was connected to the middle cylinder of the spinneret; this central annulus for dope flow had a radius of 0.34 mm. After coming out from the spinneret to the precipitation bath, the polymer solution passed through a hoop of water having a radius 0.15 mm with air inside. During spinning, all flow rates were controlled by high precision pumps. The circlet flow of water around the polymer solution works as an external coagulant and, air in contact with the inner side of polymer solution initiates the microphase separation of the block copolymer by evaporating THF from block copolymer solution.

The nascent fibers were extruded from the tip of the spinneret through a certain length of the gap distance before emerging into the precipitation bath which contained pure water. In the gap steamy ambiance was given to the fiber for its fast precipitation and continuous processing. The variation in the gap distance between the spinneret and precipitation bath let the volatile solvent evaporate from the inner side of nascent fibers at different times. THereafter, the hollow fibers entered the immersion bath with their falling velocity without applying external drawing force. The hollow fibers were kept in the water container for 24 hours at room temperature to complete removal of the residual solvent (DMF and THF), and then finally dried in air for one day. To assure complete solvent evaporation, the fibers were put under vacuum at room temperature for more than 24 hours.

SEM images of Samples 1 and 2, respectively, are shown in Figs. 3 to 16 discussed above, where the inner surface shows a good porosity and the outer surface shows a low porosity. The porosity on outer surface was be increased by using mixture of solvent and water, for example water/DMF (50/50).

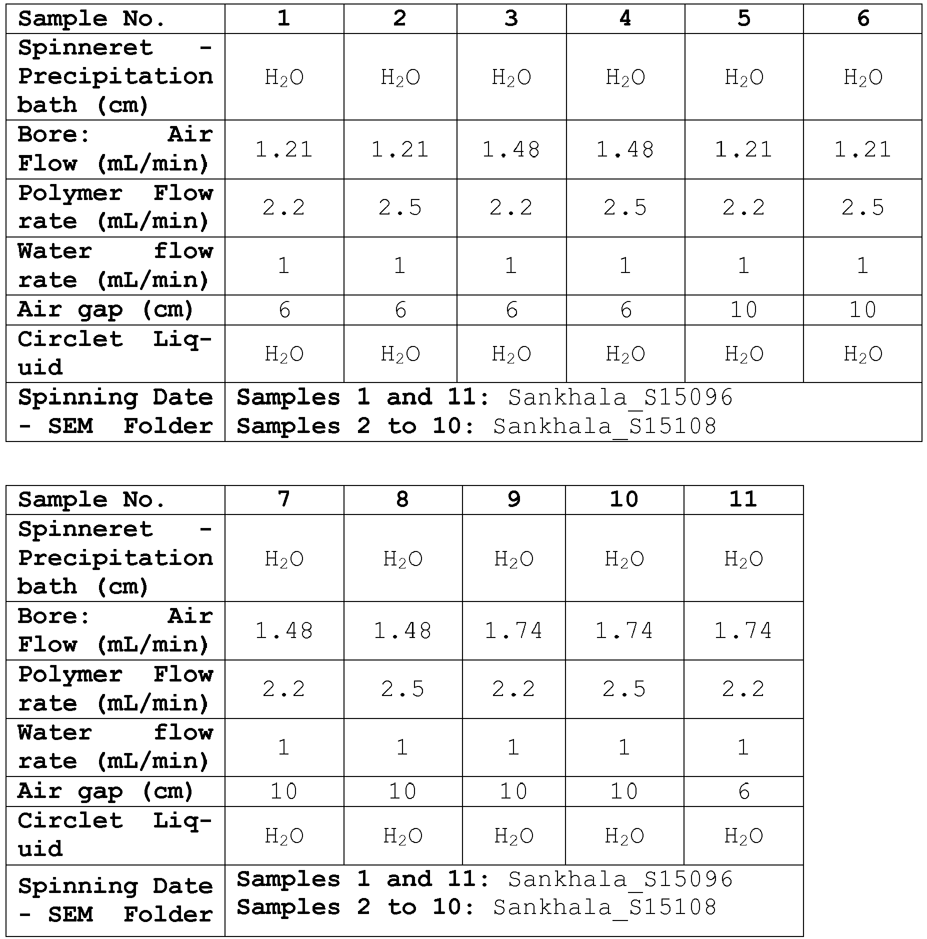

## Claims

1. A method for producing a hollow-fibre polymer membrane (14) having an isoporous inner skin, and a porous outer skin, comprising providing a polymer solution (4) of at least one amphiphilic block copolymer in a solvent; extruding the polymer solution (dope) through a first annular die in a spinneret (1) while simultaneously pressing a core gas stream (6, 16) through at least one orifice encircled by the first die and extruding a sheath liquid (5, 15) comprising at least one precipitant from a second die encircling the first annular die into air, and subsequently into an aqueous precipitation bath (12), thereby providing a gap (20) between spinneret (1, 10) and precipitation solution through which the extruded polymer solution (14) passes surrounded by the sheath liquid (15) and surrounding the core gas stream (16), and finally precipitating the spinning solution in the precipitation bath (12) to form the hollow-fibre polymer membrane (14).

2. The method according to claim 1, wherein comprising pressing a core gas stream (6, 16) through one single, central orifice encircled by the first and second annular dies to form a single-bore hollow-fibre polymer membrane.

3. The method according claim 1, comprising pressing a core gas stream (6, 16) through two to ten orifices encircled by the first and second annular dies to form a multi-bore hollow-fibre polymer membrane.

4. The method according to any of the previous claims, wherein the amphiphilic block copolymer is selected from polystyrene-b-poly-4-vinylpyridine copolymers, poly(α-methylstyrene)-b-poly-4-vinylpyridine copolymers, poly(para-methylstyrene)-b-poly-4-vinylpyridine copolymers, poly(t-butylstyrene)-b-poly-4-vinylpyridine copolymers, poly(trimethylsilylstyrene)-b-poly-4-vinylpyridine copolymers, polystyrene-b-poly-2-vinylpyridine copolymers, poly(α-methylstyrene)-*b*-poly-2-vinylpyridine copolymers, poly(para-methylstyrene)-b-poly-2-vinylpyridine copolymers, poly(t-butylstyrene)-b-poly-2-vinylpyridine copolymers, poly(trimethylsilylstyrene)-b-poly-2-vinylpyridine copolymers, polystyrene-*b*-polybutadiene copolymers, poly(α-methylstyrene)-*b*-polybutadiene copolymers, poly-(para-methylstyrene)-b-polybutadiene copolymers, poly(t-butylstyrene)-b-polybutadiene copolymers, poly(trimethylsilylstyrene)-b-polybutadiene copolymers, polystyrene-b-polyisoprene copolymers, poly(α-methylstyrene)-*b*-polyisoprene copolymers, poly(para-methylstyrene)-b-polyisoprene copolymers, poly(t-butylstyrene)-*b*-polyisoprene copolymers, poly(trimethylsilyl-styrene)-b-polyisoprene copolymers, polystyrene-b- poly(ethylene-stat-butylene) copolymers, poly(α-methylstyrene)-*b*-poly(ethylene-stat-butylene) copolymers, poly(para-methylstyrene)-b-poly(ethylene-statbutylene) copolymers, poly(t-butylstyrene)-b-poly(ethylene-stat-butylene) copolymers, poly(trimethylsilylstyrene)-b-poly(ethylene-stat-butylene) copolymers, polystyrene-*b*-(ethylene-alt-propylene) copolymers, poly(α-methylstyrene)-b-(ethylene-alt-propylene) copolymers, poly(para-methylstyrene)-b-(ethylene-alt-propylene) copolymers, poly(t-butylstyrene)-b-(ethylene-alt-propylene) copolymers, poly(trimethylsilylstyrene)-b-(ethylene-altpropylene) copolymers, polystyrene-b- polysiloxane copolymers, poly(α-methylstyrene)-*b*-polysiloxane copolymers, poly(para-methylstyrene)-*b*-polysiloxane copolymers, poly(t-butylstyrene)-*b*-polysiloxane copolymers, poly(trimethylsilylstyrene)-*b*-polysiloxane copolymers, polystyrene-b-polyalkylene oxide copolymers, poly(α-methylstyrene)-b-polyalkylene oxide copolymers, poly(paramethylstyrene)-b-polyalkylene oxide copolymers, poly(t-butylstyrene)-*b*-polyalkylene oxide copolymers, poly(trimethyl-silylstyrene)-*b*-polyalkylene oxide copolymers, polystyrene-*b*- poly-ε-caprolactone copolymers, poly(α-methylstyrene)-*b*-poly-ε-caprolactone copolymers, poly(para-methylstyrene)-*b*-poly-ε-caprolactone copolymers, poly(t-butylstyrene)-*b*-poly-ε-caprolactone copolymers, poly(trimethylsilylstyrene)-*b*-poly-ε-caprolactone copolymers, polystyrene-b-poly(methyl methacrylate) copolymers, poly(α-methylstyrene)-*b*-poly(methyl methacrylate) copolymers, poly(para-methylstyrene)-b-poly(methyl methacrylate) copolymers, poly(t-butylstyrene)-*b*-poly(methyl methacrylate) copolymers, poly(trimethylsilylstyrene)-b-poly (methyl methacrylate) copolymers, polystyrene-b-poly(methyl acrylate) copolymers, poly(α-methylstyrene)-*b-*poly(methyl acrylate) copolymers, poly(paramethylstyrene)-*b*- poly(methyl acrylate) copolymers, poly(t-butylstyrene)-*b*- poly(methyl acrylate) copolymers, poly(trimethylsilylstyrene)-b-poly(methyl acrylate), polystyrene-b-poly(hydroxyethyl methacrylate) copolymers, poly(α-methylstyrene)-*b*- poly(hydroxyethyl methacrylate) copolymers, poly(para-methylstyrene)-b-poly(hydroxyethyl methacrylate) copolymers, poly(t-butylstyrene)-b-poly(hydroxyethyl methacrylate) copolymers, poly(trimethylsilylstyrene)-b-poly(hydroxyethyl methacrylate) copolymers, polystyrene-*b*-polyacrylamide copolymers, poly(α-methylstyrene)-*b*-polyacrylamide copolymers, poly(para-methylstyrene)-*b*-polyacrylamide copolymers, poly(t-butylstyrene)-*b*-polyacrylamide copolymers, poly(trimethyl-silylstyrene)-*b*-polyacrylamide copolymers, polystyrene-*b*-polyvinyl alcohol copolymers, poly(α-methylstyrene)-*b*-polyvinyl alcohol copolymers, poly(paramethylstyrene)-*b*-polyvinyl alcohol copolymers, poly(t-butylstyrene)-*b*-polyvinyl alcohol copolymers, poly(trimethylsilylstyrene)-b-polyvinyl alcohol copolymers, polystyrene-*b*-polyvinylpyrrolidone copolymers, poly(α-methylstyrene)-*b*-polyvinylpyrrolidone copolymers, poly(para-methylstyrene)-*b*-polyvinylpyrrolidone copolymers, poly(t-butylstyrene)-*b*-polyvinylpyrrolidone copolymers, and poly(trimethylsilylstyrene)-b-polyvinylpyrrolidone copolymers polystyrene-*b*-poly-vinylcyclohexane copolymers, polystyrene-*b*-poly-vinylcyclohexane copolymers, polystyrene-*b*-poly-vinylcyclohexane copolymers, polystyrene-*b*-poly-vinylcyclohexane copolymers, poly(trimethylsilylstyrene)-*b*-polyvinyl-cyclohexane copolymers and the like.

5. The method according to any of the previous claims, wherein the amphiphilic block copolymer has a polydispersity of less than 2.5

6. The method according to any of the previous claims, wherein the solvent for the polymer is selected from diethyl ether, dimethylformamide, dimethylacetamide, N-methylpyrrolidone, dimethyl-sulfoxide, acetonitrile, dioxane, acetone, and/or tetrahydrofurane.

7. The method according to any of the previous claims, wherein the polymer solution further comprises an organic metal salt, wherein the metal is selected from an element of the second main group of the periodic system.

8. The method according to any of the previous claims, wherein the polymer solution further comprises at least one carbohydrate selected from a multifunctional phenol, a multifunctional organic acid, saccharose, D(+)-glucose, D(-)-fructose and/or cyclodextrin, in particular α-cyclodextrin.

9. The method according to any of the previous claims, wherein the sheath liquid extruded from said second annular die comprises water and/or an alcohol, and further comprises a solvent present in the polymer solution.

10. The method according to any of the previous claims, wherein the liquid sheath extruded from said further comprises at least one pore forming material selected from polyethylene glycol (PEG) and glycerol.

11. The method according to any of the previous claims, wherein the core gas is selected from air, nitrogen and a noble gas or from a mixture thereof.

12. The method according to any of the previous claims, wherein the polymer solution is extruded through the first annular orifice in the spinneret with a pressure of 1 to 50 kPa.gauge thereby forming a regular hollow-fibre membrane.

13. The method according to any of the previous claims, wherein the gap between the spinneret and the precipitation bath has a length of between 1 cm and 100 cm.

14. A polymeric hollow-fibre membrane having an isoporous inner skin and a porous outer skin.

15. Use of a hollow-fibre membrane according to claim 14 or produced according to any of claims 1 to 13 for filtration, reverse-osmosis or dialysis.
